# EUROPEAN PATENT APPLICATION

(11) **EP 1 653 464 A1**
(43) Date of publication of application: **03.05.2006**
(21) Application number: 05109234.4
(22) Date of filing: 05.10.2005
(51) Int. Cl.: G11B 20/18, G06F 17/30

(54) **Contents recording medium compensation system, contents recording and playback devices, and contents recording and playback methods**

(30) Priority: 29.10.2004 JP 2004315887
(71) Applicant: KABUSHIKI KAISHA TOSHIBA, Tokyo 105-8001 (JP)
(72) Inventor: Ohno, Katsuya Toshiba Corporation, Minato-ku Tokyo 105-8001 (JP)
(74) Representative: Henkel, Feiler & Hänzel

(57) **Abstract**

A contents recording medium compensation system comprises a contents player (11) which reads contents from a contents recording medium (14) for playback and a contents server (13) which is the provider of the contents recording medium and, when accessed by the player over a network, provides it with defect information indicating the presence or absence of a defect in the contents recorded on the recording medium and correction contents in the presence of a defect. The contents player (11) identifies the contents provider from the recording medium (14) and then makes access to the contents server to obtain the defect information and the correction contents in the presence of a defect. When the defect information indicates the presence of a defect at the time of playing back the contents on the recording medium, the contents player replaces defective contents read from the recording medium with the correction contents.

## Description

The present invention relates to a contents recording medium compensation system which, when a defect has occurred in a contents recording medium, readily compensates for that defect.

In recent years, DVD-ROMs have been made available in which contents, such as motion pictures, music clips, etc., are recorded on recording media, or DVDs (Digital Versatile Disks), allowing users to play back video and sound of high quality through the use of DVD players.

Contents recording media, such as DVD-ROMs, are not rewritable. If such contents recording media are put on the market and are defective for some reason or other, they must be withdrawn and exchanged for good ones, requiring an enormous cost and a great deal of time.

In recent years, users at computer terminals have been allowed to make access to a server over the Internet to select and download desired contents. That is, the users can readily obtain arbitrary contents. In such a content delivery system, measures must be taken in the case where defects have occurred in contents. A specific example therefor is disclosed in Japanese Unexamined Patent Publication No. 2002-049518. According to the technique disclosed in this publication, the server receives the recorded date and time of the last update of contents from the user computer and makes a decision of whether or not the contents need restoration/updating. When restoration/updating is needed, the server sends restoration/updating data to rewrite a defective data portion.

However, the technique makes an assumption that contents are stored on rewritable recording media and is not intended to correct contents recorded on non-rewritable recording media such as DVD-ROMS.

The object of the present invention is to provide a contents recording medium compensation system, contents recording and playback devices, and contents recording and playback methods which, even when a defect is found in the contents recorded on a non-rewritable contents recording medium, can correct the defective contents over a network.

According to an aspect of the present invention, there is provided a contents recording medium compensation system characterized by comprising:
a contents player (11) which reads from contents from a contents recording medium (14) and plays them back; and a contents server (13) which is the provider of the contents recording medium (14) and, when accessed over a network (12), provides defect information indicating the presence or absence of a defect in the contents and correction contents in the presence of a defect, the contents player (11) being configured to identify the provider from the contents recording medium (14), make access to the contents server (13), obtain the defect information and the correction contents in the presence of a defect from the contents server (13), and, when the defect information indicates the presence of a defect, replace defective contents with the correction contents at the time of playing back the contents recording medium (14).

The same is true for a contents recording device in which contents recorded on a recording medium are duplicated onto another recording medium. In this case as well, defect information and correction contents in the presence of a defect are obtained from the contents server. In the presence of a defect, the contents read from the contents recording medium are replaced with the correction contents and then duplicated onto the other recording medium.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram of a contents recording medium compensation system according to a first embodiment of the present invention;
FIG. 2 is a flowchart illustrating the processes associated with the DVD player and the contents server shown in the system of FIG. 1;
FIG. 3 is a block diagram of a contents recording medium compensation system according to a second embodiment of the present invention;
FIG. 4 is a flowchart illustrating the processes associated with the DVD player and the contents server shown in the system of FIG. 3; and
FIG. 5 is a block diagram of a contents recording medium compensation system according to a third embodiment of the present invention.

The embodiments of the present invention will be described in detail below with reference to the accompanying drawings.

### [First Embodiment]

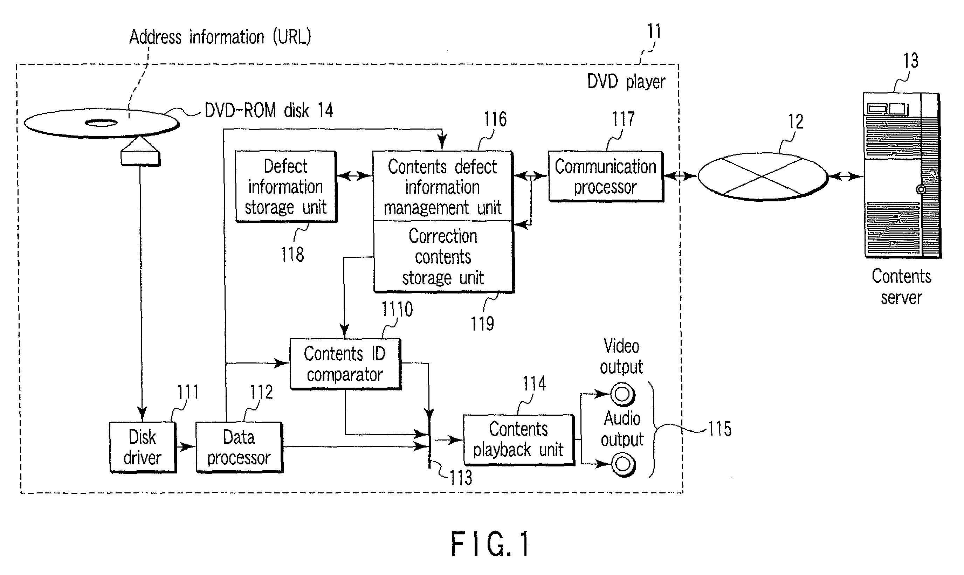

FIG. 1 is a block diagram of a contents recording medium compensation system according to a first embodiment of the present invention. In this figure, reference numeral 11 denotes a DVD player, 12 a network such as the Internet, and 13 a contents server placed on the network as the provider of a DVD-ROM disk 14. Into the contents server 13 have been previously entered information indicating the presence or absence of a defect (hereinafter referred to as defect information) in the contents recorded on the DVD-ROM disk 14 and correction contents in the presence of a defect. In the invention, correction shall include the concept of insertion. When accessed by the DVD player 11, the contents server provides it with the defect information and correction contents.

Suppose here that the DVD-ROM disk 14 has been previously recorded with address information (URL) used in making access to the contents server 13.

In the DVD player 11, recorded data read from the DVD-ROM disk 14 by a disk driver 111 is sent to a data processor 112. When the disk 14 is loaded into the player, the data processor 112 identifies parameter information read from its read-in area to prompt the user to perform a disk playback setting and sends contents data read from the disk 14 by a playback operation to a contents playback unit 114 via a selector 113. The contents playback unit 114 decodes input contents data for each of video and audio and outputs decoded video and audio signals through output terminals 115 to a display unit and a loudspeaker, respectively, which are not shown.

The data processor 112 takes the address information of the disk provider, title identification information, and content IDs (identification information appended to individual contents recorded on the disk) from the read data from the disk and then sends them to a contents defect information management unit 116.

Upon receiving the information from the data processor 112, the contents defect information management unit 116 activates a communication processor 117 in response to the address information to make access to the contents server 13 over the network 12 and presents a title ID to the server. The contents server 13 makes a decision of whether or not the contents are the subject of compensation for a defect on the basis of the title identification information sent from the DVD player 11 and provides defect information and correction contents in the presence of a defect.

In the DVD player 11, the defect information from the server 13 is stored into a defect information storage unit 118 and the correction contents are stored into a correction contents storage unit 119. A contents ID comparator 1110 makes a comparison between the content ID appended to the correction contents stored in the correction contents storage unit 119 and the content ID from the data processor 112 during DVD playback. When the content ID match occurs, the content ID comparator 1110 switches the selector 113 from the output contents of the data processor 112 to the read contents of the correction content storage unit 119 (replacement of contents) and sends the read contents to the contents playback unit 114.

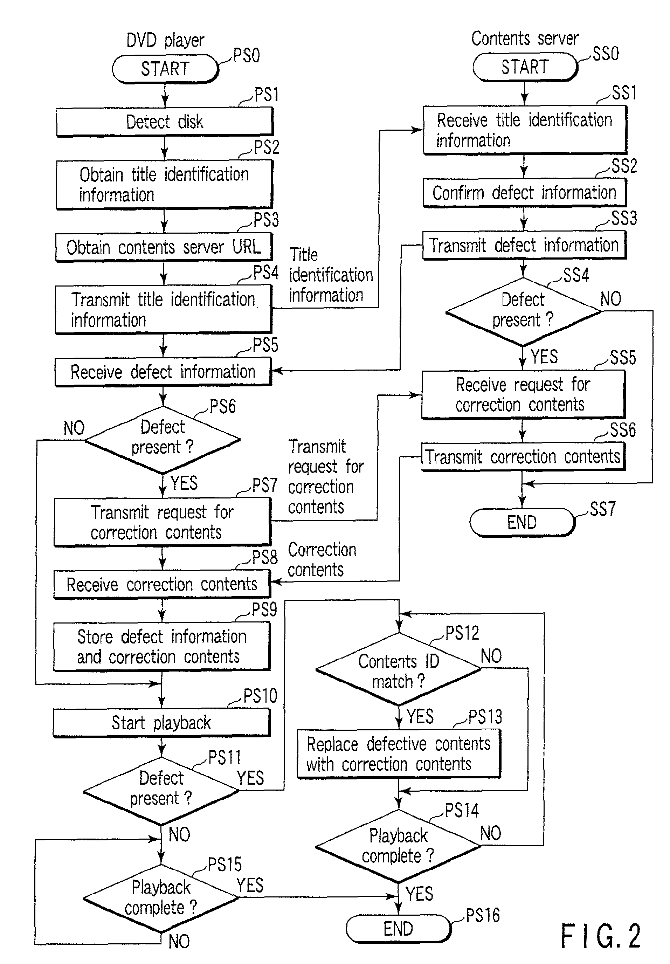

Reference is now made to FIG. 2 to describe the processes of the DVD player 11 and the contents server 13.

First, the DVD player 11 is started when the power is turned on (PS0). When the DVD disk 14 is loaded into the player, it is detected (PS1) and then a title ID and server address information are obtained from the disk 14 (PS2 and PS3). Subsequently, access is made to the contents server 13 as the provider of the disk 14 using the server address information to present title identification information to the server (PS4).

On the other hand, the contents server 13, after having started (SS0), receives the title identification information from the DVD player 11 (SS1), then confirms the presence or absence of a defect for the disk having the same title identification information (SS2) and sends the defect information to the accessing DVD player 11 (SS3). At this point, a decision is made as to whether a defect is present or absent (SS4). In the presence of a defect, in response to a request for correction/insertion contents (SS5), the server sends previously prepared correction (or insertion) contents to the DVD player 11, thereby completing a series of processes (SS7). In the absence of a defect, the server completes a series of processes without sending correction contents (SS7).

Upon receiving the defect information from the contents server 13, the DVD player 11 decides whether a defect is present or absent in the loaded disk (PS6). In the presence of a defect, the DVD player sends a request for correction/insertion contents to the contents server 13 (PS7), then receives the correction/insertion contents returned from the contents server in response to that request (PS8) and stores the defect information and the correction contents in the presence of a defect into the storage units 118 and 119, respectively (PS9).

After the playback of the disk 14 has been started (PS10), the content defect information management unit 119 refers to the contents of the defect information storage unit 118 to make a decision of whether or not defective contents are present in the disk 14 (PS11). In the presence of a defect, the content ID comparator 119 monitors the readout of contents whose ID matches the ID of the correction contents stored in the correction contents storage unit 119 (PS12).

When the content ID match is detected, the selector 113 is switched to select the correction contents in place of the defective contents (PS13) and the correction contents are played back (PS14). If the content IDs do not match, the read contents have no defect and are thus played back as they are (PS14). After the completion of the playback in step S14, a series of playback processes is complete (PS15). In the absence of a defect in step PS11, normal playback is continued (PS15). Upon completion of the playback, a series of playback processes is complete (PS16).

Thus, even in the presence of a defect in the contents of a disk, correction contents for defective contents are automatically obtained from a contents server which is the provider of that disk and the defective contents are replaced with the correction contents at playback time. Accordingly, the user can listen to the contents as if they were played back from a normal disk, i.e., without being aware of any defect.

### [Second Embodiment]

Although the first embodiment has been described in terms of a DVD player, the principles of the invention are also applicable to a DVD-HDD recording and playback device configured such that the contents of a DVD-ROM disk are duplicated onto a hard disk (HDD) to allow the user to listen to the contents with no need to exchange disks. In this case, in duplicating the contents, a defective portion of the contents is replaced with correction contents. This eliminates the need of detecting a defective portion of the contents and replacing it with correction contents in playing back the duplicated contents, thus offering more convenience to users.

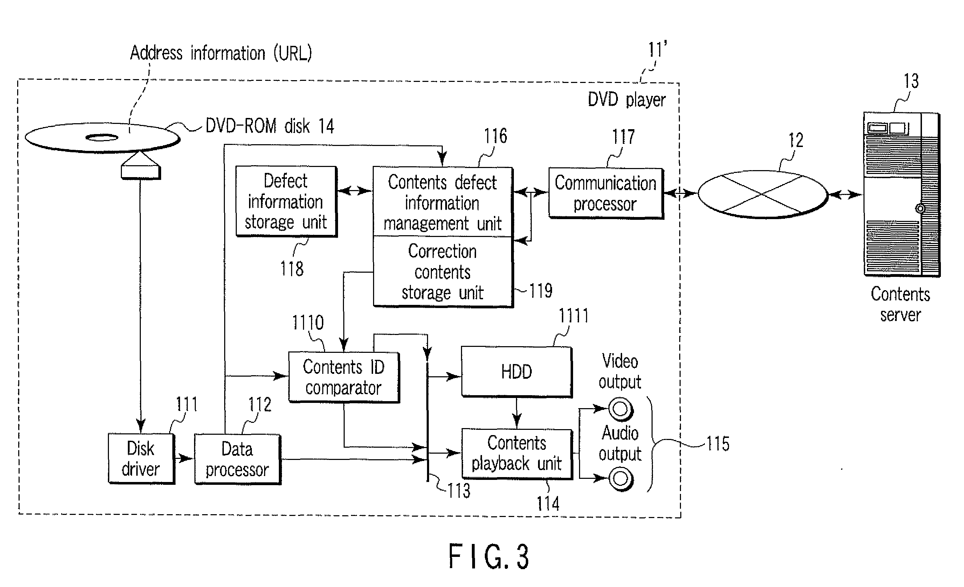

FIG. 3 is a block diagram of a DVD-HDD recording and playback device as a second embodiment of the contents recording medium compensation system of the invention. In FIG. 3, the main portion of the second embodiment is the same as that of the first embodiment. Therefore, in FIG. 3, the corresponding components to those in FIG. 1 are denoted by like reference characters and different portions will be described mainly.

In the DVD-HDD recording and playback device 11' shown in FIG. 3, the selector 113 is equipped with an output system to transmit contents to a HDD 1111, thereby allowing contents read from the disk 14 to be transmitted and written to the HDD 1111 when a command is given to duplicate the contents. The contents read from the HDD 1111 can be sent to the contents playback unit 114 for playback.

In the DVD-HDD recording and playback device 11' thus arranged, the preprocessing when a defect is present in the contents recorded on the disk 14 is exactly the same as that in the first embodiment. Thus, defect information and correction contents obtained from the contents server 13 are stored into the storage units 118 and 119, respectively. When a command is given to duplicate the contents, the read contents from the disk 14 are normally sent to the HDD 1111 through the selector 113. When defective contents are read from the disk 14, they are replaced with the correction contents through the detection processing of the contents ID comparator 1110, so that the correction contents are sent to the HDD 1111. As the result, the contents will be duplicated onto the HDD 1111 in the defect-free state.

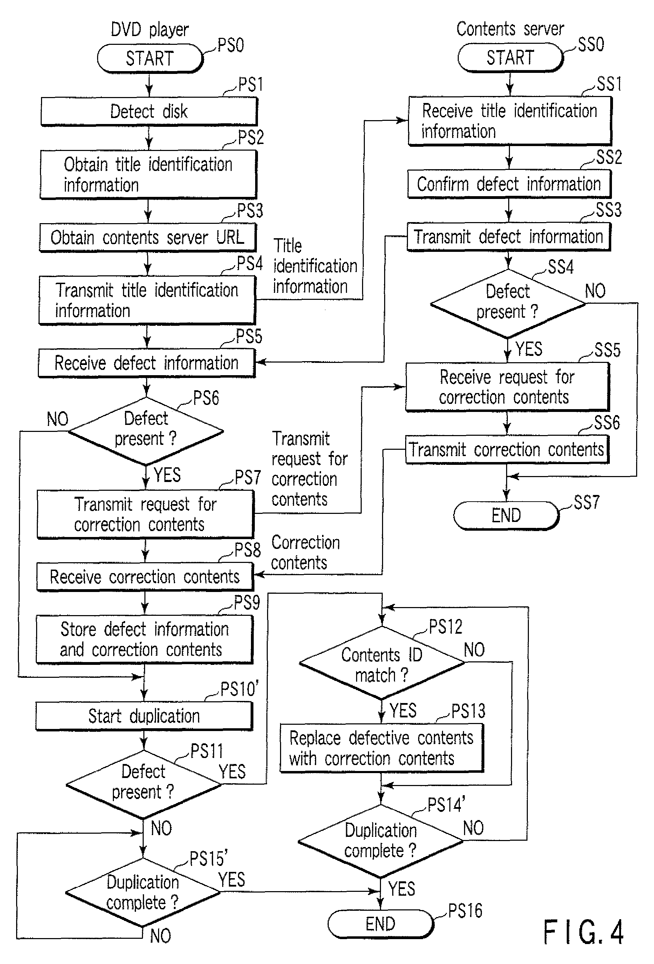

FIG. 4 is a flowchart illustrating a series of processes associated with the DVD-HDD recording and playback device and the contents server. In FIG. 4, corresponding parts to those in FIG. 2 are denoted by like reference characters. FIG. 4 is distinct from FIG. 2 in that the playback processes in steps PS10, PS14 and PS15 are replaced with duplicate processes in steps PS10', PS14' and PS15'. The playback and duplicate processes are basically similar processes and hence descriptions thereof are omitted here.

Thus, even in the presence of a defect in the contents of a disk, correction contents for defective contents are automatically obtained from a contents server which is the provider of that disk and the defective contents are replaced with the correction contents at the duplication time. Accordingly, there is no need of replacing defective contents with correction contents at the time of playing back the duplicated contents, allowing the processing to be simplified.

### [Third Embodiment]

The first embodiment has been described as the DVD-ROM disk 14 having the address information of the contents server 13 written; however, on some recording media, address information may not be written. In such a case, it is possible to utilize information about the contents owner which has normally been written on a disk recorded with contents.

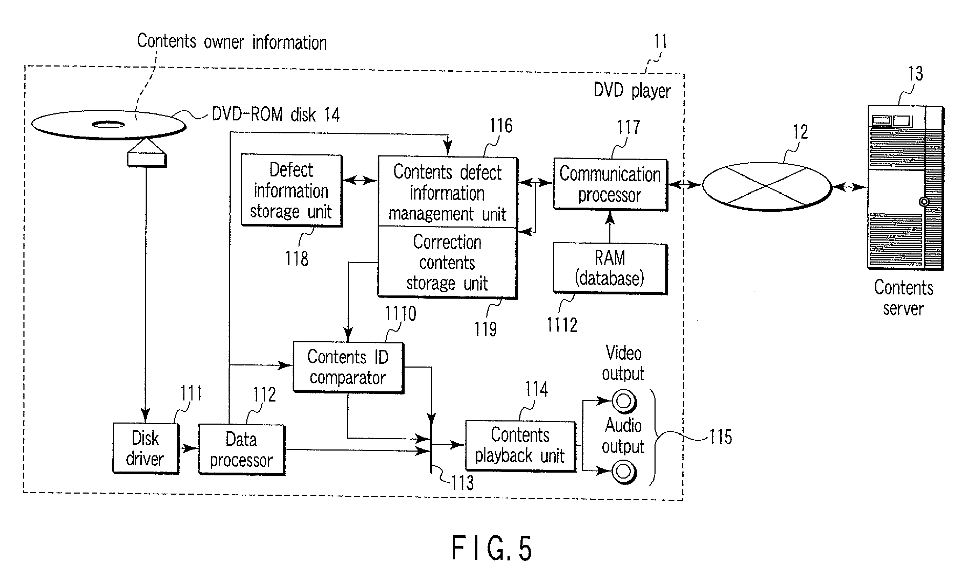

FIG. 5 is a block diagram of a contents recording medium compensation system according to a third embodiment of the present invention, which is intended to allow for the above case. In FIG. 5, corresponding parts to those in FIG. 1 are denoted by like reference characters and only different portions will be described here.

The system shown in FIG. 5 is characterized in that the communication processor 117 of the DVD player 11 is connected with a RAM 1112 in which a database is built to map contents owners to addresses of contents servers which provide defect information. That is, when the disk 14 is loaded into the DVD player, the contents owner is read from the disk and then a reference is made to the database in the RAM 1112 to obtain the address of the contents server 13. The RAM 1112 having the database built in is constructed so that it can be updated over the network 12. By setting the RAM to the latest state all the time, contents on a defective disk can be corrected more efficiently.

### [Modifications]

In the second embodiment, the HDD 1111 may be either of the built-in type or of the add-on type. In place of the HDD, another type of recording medium, such as an SD disk, may be used.

In each of the embodiments, the contents correction unit need not necessarily be the whole of contents data. The correction contents may be created and replaced in units of unique IDs (for example, sector IDs).

Each of the embodiments may be configured in such a way as to hold contents defect information obtained once in the detect information storage unit 118 for a fixed period of time. At playback time during this period of time, the presence or absence of a defect can be confirmed through information in the storage unit 118. This allows the number of times access is made to the contents server in the absence of a defect to be reduced. The defect information obtained once may be updated at regular intervals irrespective of playback of contents, which will reduce the processing time required before playback. This applies not only to playback but also to duplication.

The third embodiment has been described as contents owner information having been recorded on a disk. Any information, if it can specify contents, may be used to obtain address information.

With the system configuration described above, it is possible to recognize the contents provider from a contents recording medium in the set state, make access to the corresponding contents server, obtain defect information and correction contents in the presence of a defect from the contents server, and replace defective contents read from the recording medium for playback or duplication with the correction contents.

According to the present invention, therefore, a contents recording medium compensation system, contents recording and playback devices, and contents recording and playback methods which, even when a defect is found in the contents recorded on a non-rewritable contents recording medium, can correct the defective contents over a network.

## Claims

1. A contents recording medium compensation system **characterized by** comprising:
a contents player (11) which reads from contents from a contents recording medium (14) and plays them back; and
a contents server (13) which is the provider of the contents recording medium (14) and, when accessed over a network (12), provides defect information indicating the presence or absence of a defect in the contents and correction contents in the presence of a defect, **characterized in that**
the contents player (11) being configured to identify the provider from the contents recording medium (14), make access to the contents server (13), obtain the defect information and the correction contents in the presence of a defect from the contents server (13), and, when the defect information indicates the presence of a defect, replace defective contents with the correction contents at the time of playing back the contents recording medium (14).

2. A contents player which is used with a contents recording medium compensation system having a contents server (13) which is the provider of a contents recording medium (14) and, when accessed over a network (12), provides defect information indicating the presence or absence of a defect in the contents recorded on the recording medium and correction contents in the presence of a defect, the contents player **characterized by** comprising:
address information obtaining means (116) for obtaining address information of the contents server (13) by identifying the provider from the contents recording medium (14) in the set state;
communication means (117) connected to the network (12) for making access to the contents server (13) through the address information;
information obtaining means (116) for obtaining defect information indicating the presence or absence of a defect in the contents recorded on the recording medium (14) and correction contents in the presence of a defect from the server (13) by presenting identification information of the recording medium (14) to the server (13) through the communication means (117);
information storage means (118, 119) for storing the defect information and the correction contents in the presence of a defect; and
contents replacing means (113, 1110) for replacing defective contents read from the recording medium with the correction contents, when the defect information in the information storage means indicates the presence of a defect in the contents recorded on the recording medium (14) in playing back the contents.

3. The contents player according to claim 2, **characterized in that** the address information obtaining means (116) obtains the address information of the contents server (13) by reading address information previously recorded on the contents recording medium (14).

4. The contents player according to claim 2, **characterized in that** the address information obtaining means (116) obtains the address information of the contents server (13) by reading provider information previously recorded on the contents recording medium (14) and then referring to a previously prepared provider-to-address mapping database.

5. A contents recording device which is used with a contents recording medium compensation system having a contents server (13) which is the provider of a contents recording medium (14) and, when accessed over a network (12), provides defect information indicating the presence or absence of a defect in the contents recorded on the recording medium and correction contents in the presence of a defect, the contents recording device **characterized by** comprising:
address information obtaining means (116) for obtaining address information of the contents server (13) by identifying the provider from the contents recording medium (14) in the set state;
communication means (117) connected to the network (12) for making access to the contents server (13) through the address information;
information obtaining means (116) for obtaining defect information indicating the presence or absence of a defect in the contents recorded on the recording medium (14) and correction contents in the presence of a defect from the server (13) by presenting identification information of the recording medium (14) to the server (13) through the communication means (117);
information storage means (118, 119) for storing the defect information and the correction contents in the presence of a defect; and
contents replacing means (113, 1110) for replacing defective contents read from the recording medium with the correction contents, when the defect information in the information storage means indicates the presence of a defect in the contents recorded on the recording medium (14) in duplicating the contents onto another recording medium (1111).

6. The contents recording device according to claim 5, **characterized in that** the address information obtaining means (116) obtains the address information of the contents server (13) by reading address information previously recorded on the contents recording medium (14).

7. The contents recording device according to claim 5, **characterized in that** the address information obtaining means (116) obtains the address information of the contents server (13) by reading provider information previously recorded on the contents recording medium (14) and then referring to a previously prepared provider-to-address mapping database.

8. A contents playback method which is used with a contents recording medium compensation system having a contents server (13) which is the provider of a contents recording medium (14) and, when accessed over a network (12), provides defect information indicating the presence or absence of a defect in the contents recorded on the recording medium and correction contents in the presence of a defect, the contents playback method **characterized by** comprising the steps of:
obtaining address information of the contents server (13) by identifying the provider from the contents recording medium (14) in the set state;
obtaining defect information indicating the presence or absence of a defect in the contents recorded on the recording medium (14) and correction contents in the presence of a defect from the server (13) by making access to the contents server through the address information over the network to present identification information of the recording medium (14) to it;
storing the defect information and the correction contents in the presence of a defect; and
replacing defective contents read from the recording medium with the correction contents, when the defect information in the information storage means indicates the presence of a defect in the contents recorded on the recording medium (14) in playing back the contents.

9. A contents recording method which is used with a contents recording medium compensation system having a contents server (13) which is the provider of a contents recording medium (14) and, when accessed over a network (12), provides defect information indicating the presence or absence of a defect in the contents recorded on the recording medium and correction contents in the presence of a defect, the contents recording method **characterized by** comprising the steps of:
obtaining address information of the contents server (13) by identifying the provider from the contents recording medium (14) in the set state;
obtaining defect information indicating the presence or absence of a defect in the contents recorded on the recording medium (14) and correction contents in the presence of a defect from the server (13) by making access to the contents server through the address information over the network to present identification information of the recording medium (14) to it;
storing the defect information and the correction contents in the presence of a defect; and
replacing defective contents read from the recording medium with the correction contents, when the defect information in the information storage means indicates the presence of a defect in the contents recorded on the recording medium (14) in duplicating the contents onto another recording medium.
